(19) Europäisches Patentamt
European Patent Office
Office européen des brevets

(11) EP 3 956 512 B1

(12) EUROPEAN PATENT SPECIFICATION

(45) Date of publication and mention of the grant of the patent:
**05.07.2023 Bulletin 2023/27**

(21) Application number: **20724289.2**

(22) Date of filing: **14.04.2020**

(51) International Patent Classification (IPC):
***D04H 1/4274*** *(2012.01)* ***D04H 1/4382*** *(2012.01)*
***D04H 1/4291*** *(2012.01)* ***D04H 1/4334*** *(2012.01)*
***D04H 1/435*** *(2012.01)* ***D04H 3/147*** *(2012.01)*
***D04H 3/007*** *(2012.01)* ***D04H 3/009*** *(2012.01)*
***D04H 3/011*** *(2012.01)*

(52) Cooperative Patent Classification (CPC):
**D04H 1/43825; D04H 1/4274; D04H 1/4291; D04H 1/4334; D04H 1/435; D04H 1/43828; D04H 1/4383; D04H 3/007; D04H 3/009; D04H 3/011; D04H 3/147**

(86) International application number:
**PCT/US2020/028094**

(87) International publication number:
**WO 2020/214576 (22.10.2020 Gazette 2020/43)**

(54) **NONWOVEN WEBS, AND PROCESSES FOR MANUFACTURING SUCH**

VLIESSTOFFE UND VERFAHREN ZU IHRER HERSTELLUNG

BANDES NON TISSÉES ET LEURS PROCÉDÉS DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2019 US 201962834673 P**

(43) Date of publication of application:
**23.02.2022 Bulletin 2022/08**

(73) Proprietor: **Dow Global Technologies LLC**
**Midland, MI 48674 (US)**

(72) Inventors:
- **LARIOS, Fabricio Arteaga**
**Lake Jackson, TX 77566 (US)**
- **ZHANG, Lanhe**
**Lake Jackson, TX 77566 (US)**
- **LIN, Yijian**
**Freeport, Texas 77541 (US)**

(74) Representative: **Boult Wade Tennant LLP**
**Salisbury Square House**
**8 Salisbury Square**
**London EC4Y 8AP (GB)**

(56) References cited:
**WO-A1-2018/181909 WO-A2-2007/002387**
**US-A- 5 565 158**

- **DATABASE WPI Week 201012 Thomson Scientific, London, GB; AN 2009-S36938 XP002799374, & CN 101 591 860 A (HUAFON MICROFIBRE SHANGHAI CO LTD) 2 December 2009 (2009-12-02)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### CROSS REFERENCE TO RELATED APPLICATIONS

This application claims priority to U.S. Provisional Patent Application No. 62/834,673, filed on April 16, 2019.

### TECHNICAL FIELD

The present disclosure generally relates to textiles, and more specifically, to nonwoven web materials.

### BACKGROUND

Nonwoven fabrics, sometimes referred to as nonwoven webs, are cloth-like materials that are manufactured from filaments which are brought together via different bonding techniques (*e.g.,* spunbond or meltblown processes). These nonwoven fabrics may be used in hygiene and/or medical applications, such as, disposable absorbent articles, including diapers, wipes, feminine hygiene products, and adult incontinence products. Nonwoven fabrics may provide specific functions such as absorbency, liquid repellence, resilience, stretch, softness, strength, flame retardancy, washability, cushioning, thermal insulation, acoustic insulation, filtration, use as a bacterial barrier and sterility.
WO 2007/002387 A2 relates to fabrics composed of micro-denier fibers wherein said fibers are formed as bicomponent fibrillated fiber. WO 2018/181909 A1 relates to splittable conjugate fibers and fiber structure using same. Database WPI AN 2009-S36938 & CN 101 591 860 A relate to a scratch resistant processing method of non-figured island ultrafine fiber napped leather. US 5,565,158 A relates to a process of recycling a multicomponent mixed polymer waste material, involving the steps of agglomerating the multicomponent mixed polymer waste material and spinning the agglomerate to form yarn, wherein the multicomponent mixed polymer waste material contains a blend of at least two incompatible polymers.

### SUMMARY

Nonwoven web materials may be formed from bicomponent fibers. In such bicomponent fibers, two polymer materials are incorporated into the fibers from which the nonwoven materials are formed. Many bicomponent fibers utilize a core and sheath geometry with, for example, a polypropylene, polyester, or polyamide core and a polyethylene sheath. Such an arrangement may provide for desirable properties such as enhanced softness.

In many manufacturing processes, portions the nonwoven webs produced from the bicomponent fibers may not ultimately be sold or used in making, for example, disposable consumer products. For example, the nonwoven web may be cut to a specified shape and/or width, removing some portions of the nonwoven web that are considered waste materials. In additional embodiments, even entire spools of nonwoven web which are not ultimately used for the production of downstream products due to, for example, over-manufacture or defect, may be considered as waste portions. It may be beneficial to recycle these excess materials to form additional bicomponent fiber, reducing the supply of needed feedstock polymers.

However, it has been discovered that core/sheath geometry may significantly lose spinnability when even small amounts of the core material are present in the sheath, or vice versa, which may be present when excess nonwoven material (containing, e.g., both the sheath and core material) is utilized to form the bicomponent fiber. For example, in core/sheath fibers, if even 2.5 wt.% of the core or sheath materials are incorporated into the other section, significant fiber breaks are seen during fiber spinning process. This presents a problem since the waste nonwoven web is, effectively, a mixture of core and sheath material that cannot be easily separated. That is, it is difficult or even impossible to individually recover the core material and recycle it to the core material feed and recover the sheath material and recycle it to the sheath material feed.

It has been discovered that this effect (i.e., loss of spinnability) can be mitigated by forming bicomponent fibers which have geometries with relatively dispersed polymer regions. For example, fiber geometries such as "island in the sea" may allow for greater amounts of intermixing of the two polymer components in the bicomponent fiber (caused by utilization of the excess nonwoven web material) than "core/sheath" or "side-by-side" arrangements. In such embodiments, the bicomponent fiber includes at least one "primary" polymer region and two or more "secondary" polymer regions. Utilization of such fiber geometries may allow for incorporation of the mixed material waste nonwoven into the feeds of the primary polymer regions or secondary polymer regions of the fiber.

In accordance with one embodiment of the present disclosure, a nonwoven web may be manufactured by a process that comprises forming a bicomponent fiber and forming the bicomponent fiber into the nonwoven web. The bicomponent fiber comprises one or more primary polymer regions and two or more secondary polymer regions. The primary polymer regions comprise polyethylene. The secondary polymer regions comprise polypropylene, polyester, or

polyamide. The primary polymer regions comprise at least 2.5 wt.% of polypropylene, polyester, or polyamide, or the secondary polymer regions may comprise at least 2.5 wt.% of polyethylene, or both. When the primary polymer regions comprise at least 2.5 wt.% of polypropylene, polyester, or polyamide, the primary polymer regions are at least partially formed from a feed nonwoven web material. When the secondary polymer regions comprise at least 2.5 wt.% of polyethylene, the secondary polymer regions are at least partially formed from the feed nonwoven web material. The feed nonwoven web material comprises polyethylene, and further comprises polypropylene, polyester, or polyamide.

In a preferred embodiment of the present disclosure, a nonwoven web may be manufactured by a process that comprises forming a bicomponent fiber by feeding polyethylene into a primary polymer region material feed and polypropylene, polyester, or polyamide into a secondary polymer region material feed of a fiber forming machine. The bicomponent fiber comprises one or more primary polymer regions each formed from the polyethylene and two or more secondary polymer regions formed from the polypropylene, polyester, or polyamide. The process further comprises removing a waste portion of the nonwoven web. The waste portion comprises polyethylene, and further comprises polypropylene, polyester, or polyamide. The process further comprises feeding at least some of the waste portion into the fiber forming machine such that bicomponent fiber is formed. The primary polymer regions comprise at least 2.5 wt.% of polypropylene, polyester, or polyamide, the secondary polymer regions comprise at least 2.5 wt.% of polyethylene, or both.

In accordance with yet another embodiment of the present disclosure, a nonwoven web is formed from bicomponent fiber. The bicomponent fiber comprises one or more primary polymer regions and two or more secondary polymer regions. The primary polymer regions comprise at least 80 wt.% polyethylene. The secondary polymer regions comprise at least 80 wt.% polypropylene, polyester, or polyamide. The primary polymer regions comprise at least 2.5 wt.% of polypropylene, polyester, or polyamide, or the secondary polymer regions comprise at least 2.5 wt.% of polyethylene, or both.

Additional features and advantages of the technology disclosed herein will be set forth in the detailed description which follows, and in part will be readily apparent to those skilled in the art from that description or recognized by practicing the technology as described herein, including the detailed description which follows, the claims, as well as the appended drawings.

It is to be understood that both the foregoing general description and the following detailed description present embodiments of the technology, and are intended to provide an overview or framework for understanding the nature and character of the technology as it is claimed. The accompanying drawings are included to provide a further understanding of the technology, and are incorporated into and constitute a part of this specification. The drawings illustrate various embodiments and together with the description serve to explain the principles and operations of the technology. Additionally, the drawings and descriptions are meant to be merely illustrative, and are not intended to limit the scope of the claims in any manner.

## BRIEF DESCRIPTION OF THE DRAWINGS

The following detailed description of specific embodiments of the present disclosure can be best understood when read in conjunction with the following drawings, where like structure is indicated with like reference numerals and in which:

FIGS. 1A-1F schematically depict cross-sectional views of embodiments of bicomponent fiber geometries which may be suitable for the methods described herein, where:

FIG. 1A schematically depicts an "island in the sea" bicomponent fiber geometry, according to one or more embodiments described herein;

FIG. 1B schematically depicts another "island in the sea" bicomponent fiber geometry, according to one or more embodiments described herein;

FIG. 1C schematically depicts another "island in the sea" bicomponent fiber geometry, according to one or more embodiments described herein;

FIG. 1D schematically depicts another "island in the sea" bicomponent fiber geometry, according to one or more embodiments described herein;

FIG. 1E schematically depicts a "citrus" bicomponent fiber geometry, according to one or more embodiments described herein;

FIG. 1F schematically depicts a "pie segmented" bicomponent fiber geometry, according to one or more embodiments described herein;

FIGS. 2A and 2B schematically depict example embodiments of bicomponent fiber geometries which may not be suitable for the methods described herein, where:

FIG. 2A schematically depicts a "core/sheath" bicomponent fiber geometry, according to one or more embodiments described herein;

FIG. 2B schematically depicts a "side by side" bicomponent fiber geometry, according to one or more embodiments described herein;

FIG. 3 schematically depicts a process whereby a waste portion of a nonwoven web material is reformed into bicomponent fiber, according to one or more embodiments described herein.

## DETAILED DESCRIPTION

Reference will now be made in greater detail to various embodiments, some embodiments of which are illustrated in the accompanying drawings. Whenever possible, the same reference numerals will be used throughout the drawings to refer to the same or similar parts.

The embodiments disclosed herein are directed to processes for manufacturing bicomponent fibers, processes for manufacturing nonwoven web materials produced from such bicomponent fibers, as well as the manufactured bicomponent fibers and nonwoven web materials. As described herein, "bicomponent fibers" refer to fibers that include two or more different materials which are generally disposed in different cross-sectional regions of the fiber. For example, FIGS. 1A-1F and 2A-2B depict embodiments of bicomponent fiber geometries. It should be understood that each respective material of the bicomponent fiber may be a mixture of two or more polymers, or a single polymeric composition.

Still referring to FIGS. 1A-1F and 2A-2B, bicomponent fibers may include a primary polymer regions and secondary polymer regions. In FIGS. 1A-1F and 2A-2B, primary polymer regions are depicted as white regions and secondary polymer regions are depicted as cross-hatched regions in the cross-section of the bicomponent fiber. It should be understood that the polymer regions (e.g., the primary polymer regions and secondary polymer region) are defined by their borders with neighboring polymer regions based on material composition. For example, the entire perimeter of a primary polymer region is in direct contact with secondary polymer regions having a different material composition, or define a perimeter of the bicomponent fiber, and vice versa.

In one or more embodiments, the weight ratio of primary polymer regions to secondary polymer regions is from 90:10 to 10:90. For example, the weight ratio of primary polymer regions to secondary polymer regions may be from 80:20 to 20:80, from 70:30 to 30:70, from 60:40 to 40:60, or from 55:45 to 45:55. In one or more embodiments, at least 10 wt.%, at least 20 wt.%, at least 30 wt.%, at least 40 wt.%, at least 50 wt.%, at least 60 wt.%, at least 70 wt.%, at least 80 wt.%, or even at least 90 wt.% of the fiber is primary polymer region. In one or more additional embodiments, at least 10 wt.%, at least 20 wt.%, at least 30 wt.%, at least 40 wt.%, at least 50 wt.%, at least 60 wt.%, at least 70 wt.%, at least 80 wt.%, or even at least 90 wt.% of the fiber is secondary polymer regions.

According to one or more embodiments presently described, the bicomponent fiber may include two or more secondary polymer regions. Examples of such embodiments are provided in FIGS. 1A-1F. For example, the bicomponent fiber may comprise at least 2, at least 3, at least 4, at least 5, at least 6, at least 7, at least 8, at least 9, at least 10, at least 15, at least 20, at least 25, or even at least 30 secondary polymer regions. On the other hand, FIGS. 2A and 2B depict embodiments which only include a single secondary polymer region. As is described in detail herein, the processes described herein may form bicomponent fibers that include two or more secondary polymer regions, particularly when there is overlap in the material composition of the primary polymer region and the secondary polymer region, such as when excess nonwoven material made from the bicomponent fiber is utilized (e.g., "recycled") to form additional bicomponent fiber. For example, such embodiments may include the majority material of the primary polymer region in the secondary polymer region, and vice versa.

In the depicted embodiments, the primary polymer regions have a different material composition than the secondary polymer regions. According to embodiments described herein, the primary polymer regions may comprise a majority of polyethylene, and the secondary polymer regions may comprise a majority of polypropylene, polyester, or polyamide. However, as will be described in detail herein, the primary polymer regions may additionally comprise relatively small amounts of polypropylene, polyester, or polyamide, and the secondary polymer regions may comprise relatively small amounts of polyethylene.

As presently described, polyethylenes, sometimes referred to as ethylene-based polymers, such as ethylene/alpha-olefin interpolymers, refer to polymers comprising greater than 50% by mole of units derived from ethylene monomer.

This includes ethylene-based homopolymers or copolymers (meaning units derived from two or more comonomers). Common forms of polyethylene include, but are not limited to, Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m- LLDPE); Medium Density Polyethylene (MDPE); and High Density Polyethylene (HDPE).

According to one or more embodiments, example commercially available polyethylenes may include, without limitation, ASPUN™ 6000, ASPUN™ 6850, or other ASPUN™ series polymers available from Dow Chemical. Further suitable polyethylenes or other materials that may be utilized in the present embodiments, may include those disclosed in European Patent Application Number 18382830.0 entitled "A NON-WOVEN FABRIC HAVING ETHYLENE/ALPHA-OLEFIN POLYMER FIBERS" (docket 82572), published as WO 2020/106797 A1, as well as U.S. Provisional Patent Application Number 62/769,618 (docket 82570) and U.S. Provisional Patent Application Number 62/769,615 (docket 82571), published as US 2022/0228297 A1 and US 2022/0049377 A1.

According to one or more embodiments, suitable polyethylenes may have a density of from 0.910 g/cm$^3$ to 0.970 g/cm$^3$. For example, the polyethylene may have a density of from 0.915 g/cm$^3$ to 0.960 g/cm$^3$, from 0.920 g/cm$^3$ to 0.955 g/cm$^3$, from 0.925 g/cm$^3$ to 0.945 g/cm$^3$, or from 0.930 g/cm$^3$ to 0.940 g/cm$^3$. In additional embodiments, the polyethylene may have a density of at least 0.910 g/cm$^3$, at least 0.915 g/cm$^3$, at least 0.920 g/cm$^3$, at least 0.925 g/cm$^3$, at least 0.930 g/cm$^3$, at least 0.935 g/cm$^3$, at least 0.940 g/cm$^3$, at least 0.945 g/cm$^3$, at least 0.950 g/cm$^3$, at least 0.955 g/cm$^3$, at least 0.960 g/cm$^3$, or at least 0.965 g/cm$^3$. In yet additional embodiments, the polyethylene may have a density of less than or equal to 0.915 g/cm$^3$, less than or equal to 0.920 g/cm$^3$, less than or equal to 0.925 g/cm$^3$, less than or equal to 0.930 g/cm$^3$, less than or equal to 0.935 g/cm$^3$, less than or equal to 0.940 g/cm$^3$, less than or equal to 0.945 g/cm$^3$, less than or equal to 0.950 g/cm$^3$, less than or equal to 0.955 g/cm$^3$, less than or equal to 0.960 g/cm$^3$, less than or equal to 0.965 g/cm$^3$, or less than or equal to 0.970 g/cm$^3$. Density is measured according to ASTM D792.

According to one or more embodiments, suitable polyethylenes may have a melt index (I2) of from 10 to 60 g/10 minutes, wherein the I2 is measured according to ASTM D1238, 190°C, 2.16 kg. For example, the polyethylene may have a melt index (I2) of from 15 to 35 g/10 minutes. In additional embodiments, the polyethylene may have a melt index (I2) of at least 10 g/10 minutes, at least 15 g/10 minutes, at least 20 g/10 minutes, at least 25 g/10 minutes, at least 30 g/10 minutes, at least 35 g/10 minutes, at least 40 g/10 minutes, at least 45 g/10 minutes, at least 50 g/10 minutes, or at least 55 g/10 minutes. In additional embodiments, the polyethylene may have a melt index (I2) of less than or equal to 15 g/10 minutes, less than or equal to 20 g/10 minutes, less than or equal to 25 g/10 minutes, less than or equal to 30 g/10 minutes, less than or equal to 35 g/10 minutes, less than or equal to 40 g/10 minutes, less than or equal to 45 g/10 minutes, less than or equal to 50 g/10 minutes, less than or equal to 55 g/10 minutes, or less than or equal to 60 g/10 minutes.

According to one or more embodiments, suitable polyethylenes may have a molecular weight distribution by the method set forth below, expressed as the ratio of the weight average molecular weight to number average molecular weight ($M_{w(GPC)}/M_{n(GPC)}$) of from 1.5 to 3.5, such as from 2.0 to 3.3. For example, ratio of the weight average molecular weight to number average molecular weight ($M_{w(GPC)}/M_{n(GPC)}$) may be at least 1.5, at least 1.6, at least 1.7, at least 1.8, at least 1.9, at least 2.0, at least 2.1, at least 2.2, at least 2.3, at least 2.4, at least 2.5, at least 2.6, at least 2.7, at least 2.8, at least 2.9, at least 3.0, at least 3.1, at least 3.2, at least 3.3, at least 3.4, less than or equal to 1.6, less than or equal to 1.7, less than or equal to 1.8, less than or equal to 1.9, less than or equal to 2.0, less than or equal to 2.1, less than or equal to 2.2, less than or equal to 2.3, less than or equal to 2.4, less than or equal to 2.5, less than or equal to 2.6, less than or equal to 2.7, less than or equal to 2.8, less than or equal to 2.9, less than or equal to 3.0, less than or equal to 3.1, less than or equal to 3.2, less than or equal to 3.3, less than or equal to 3.4, less than or equal to 3.5, or any combination thereof.

According to one or more embodiments, suitable polyethylenes may have a vinyl saturation number per 1,000,000 carbon atoms of from 100 to 400. For example, the polyethylene may have a vinyl saturation number per 1,000,000 carbon atoms of at least 150, at least 200, at least 250, at least 300, at least 350, less than or equal to 400, less than or equal to 350, less than or equal to 300, less than or equal to 250, less than or equal to 200, less than or equal to 150, or combinations thereof. Such vinyl saturation is determined by $^1$H-NMR as described herein.

In one or more embodiments, the polyethylenes may be ethylene/alphaolefin interpolymers. By interpolymer is meant that the polymer is a polymer of two, three, or more monomers - i.e. a copolymer, terpolymer, etc. In this case the first monomer is ethylene. The second monomer is an alpha olefin. Such alpha olefins have at least 3 carbon atoms, and, for example, may have up to 20, or up to 10 or up to 8 carbons atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene.Optional third, fourth, or more monomers may be alpha-olefins.

The interpolymers are, according to one or more embodiments, random interpolymers. In certain embodiments, the interpolymer comprises at least 50 mole percent or at least 60 mole percent or at least 70 mole percent of ethylene based repeat units based on total moles of repeat units in the interpolymer. In certain embodiments, the interpolymer comprises no more than 99.9 or 99.5 or 99, or 95, or 90 or 85 mole percent ethylene based repeat units based on total

moles of repeat units in the interpolymer. In certain embodiments the interpolymer comprises at least 0.1 or at least 0.5 or at least 1 or at least 5 or at least 10 mole percent of alpha olefin based repeat units based on total moles of repeat units in the interpolymer (i.e. the second and optional third and fourth monomers). In certain embodiments the interpolymer comprises no more than 50 or no more than 30 mole percent of alpha olefin based repeat units based on total moles of repeat units in the interpolymer (i.e. the second and optional third and fourth monomers).

To form the interpolymer, in general, the solution phase polymerization process may occur in one or more well-mixed reactors such as one or more isothermal loop reactors or one or more adiabatic reactors at a temperature in the range of from 115 to 250° C; for example, from 115 to 200°C, and at pressures in the range of from 300 to 1000 psi; for example, from 400 to 750 psi. In one embodiment in a dual reactor, the temperature in the first reactor is in the range of from 115 to 190°C, for example, from 115 to 150°C, and the second reactor temperature is in the range of 150 to 200°C, for example, from 170 to 195°C. In another embodiment in a single reactor, the temperature in the reactor is in the range of from 115 to 190°C, for example, from 115 to 150°C. The residence time in solution phase polymerization process is typically in the range of from 2 to 30 minutes; for example, from 10 to 20 minutes. Ethylene, solvent, hydrogen, one or more catalyst systems, optionally one or more co-catalysts, and optionally one or more comonomers are fed continuously to one or more reactors. Exemplary solvents include, but are not limited to, isoparaffins. For example, such solvents are commercially available under the name ISOPAR E from ExxonMobil Chemical Co., Houston, Tex. The resultant mixture of the ethylene/alpha-olefin interpolymer and solvent is then removed from the reactor and the ethylene/alpha-olefin interpolymer is isolated. Solvent is typically recovered via a solvent recovery unit, i.e. heat exchangers and vapor liquid separator drum, and is then recycled back into the polymerization system.

In one embodiment, the ethylene/$\alpha$-olefin interpolymer composition may be produced via solution polymerization in a dual reactor system, for example a dual loop reactor system, wherein ethylene and optionally one or more $\alpha$-olefins are polymerized in the presence of one or more catalyst systems. Additionally, one or more co-catalysts may be present.

In another embodiment, the ethylene/alpha-olefin interpolymers may be produced via solution polymerization in a single reactor system, for example a single loop reactor system, wherein ethylene and optionally one or more $\alpha$-olefins are polymerized in the presence of one or more catalyst systems. According to an embodiment two different catalysts are used in a dual reactor system. One or both of the two different catalysts have the formula (I) as shown below. This allows for manufacture of the bimodal interpolymer compositions as described above.

An exemplary catalyst system suitable for producing the first ethylene/alpha olefin interpolymer can be a catalyst system comprising a procatalyst component comprising a metal-ligand complex of formula (I):

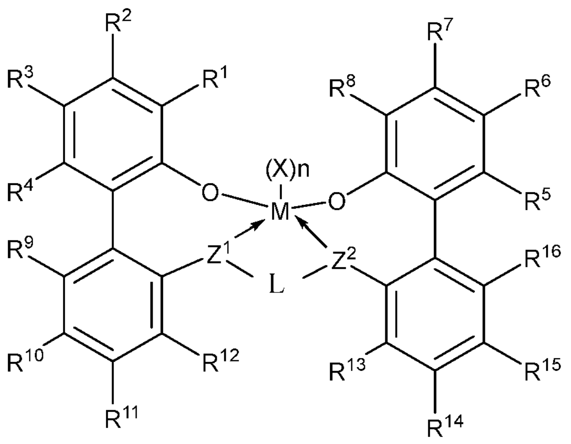

(I)

In formula (I), M is a metal chosen from titanium, zirconium, or hafnium, the metal being in a formal oxidation state of +2, +3, or +4; n is 0, 1, or 2; when n is 1, X is a monodentate ligand or a bidentate ligand; when n is 2, each X is a monodentate ligand and is the same or different; the metal-ligand complex is overall charge-neutral; each Z is independently chosen from -O-, -S-, -N($R^N$)-, or -P($R^P$)-, wherein independently each $R^N$ and $R^P$ is (C1-C30)hydrocarbyl or (C1-C30)heterohydrocarbyl; L is ($C_1$-$C_{40}$)hydrocarbylene or ($C_1$-$C_{40}$)heterohydrocarbylene, wherein the ($C_1$-$C_{40}$)hydrocarbylene has a portion that comprises a 1-carbon atom to 10-carbon atom linker backbone linking the two Z groups in Formula (I) (to which L is bonded) or the ($C_1$-$C_{40}$)heterohydrocarbylene has a portion that comprises a 1-atom to 10-atom linker backbone linking the two Z groups in Formula (I), wherein each of the 1 to 10 atoms of the 1-atom to 10-atom linker backbone of the ($C_1$-$C_{40}$)heterohydrocarbylene independently is a carbon atom or heteroatom, wherein each heteroatom independently is O, S, S(O), $S(O)_2$, $Si(R^C)_2$, $Ge(R^C)_2$, P($R^C$), or N($R^C$), wherein independently each $R^C$ is ($C_1$-$C_{30}$)hydrocarbyl or ($C_1$-$C_{30}$)heterohydrocarbyl; $R^1$ and $R^8$ are independently selected from the group consisting of -H, ($C_1$-$C_{40}$)hydrocarbyl, ($C_1$-$C_{40}$)heterohydrocarbyl, -$Si(R^C)_3$, -$Ge(R^C)_3$, -$P(R^P)_2$, -$N(R^N)_2$, -$OR^C$, -$SR^C$, -$NO_2$, -CN, -$CF_3$,

$R^CS(O)$-, $R^CS(O)_2$-, $(R^C)_2C$=N-, $R^CC(O)O$-, $R^COC(O)$-, $R^CC(O)N(R^N)$-, $(R^N)_2NC(O)$-, halogen, and radicals having formula (II), formula (III), or formula (IV):

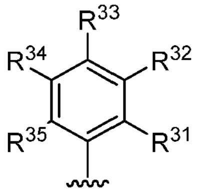
(II)
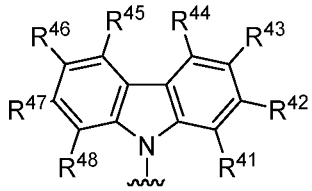
(III)
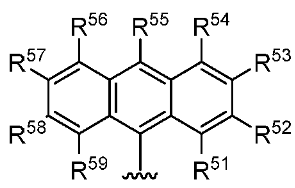
(IV)

In formulas (II), (III), and (IV), each of $R^{31-35}$, $R^{41-48}$, or $R^{51-59}$ is independently chosen from $(C_1\text{-}C_{40})$hydrocarbyl, $(C_1\text{-}C_{40})$heterohydrocarbyl, $-Si(R^C)_3$, $-Ge(R^C)_3$, $-P(R^P)_2$, $-N(R^N)_2$, $-N=CHR^C$, $-OR^C$, $-SR^C$, $-NO_2$, -CN, $-CF_3$, $R^CS(O)$-, $R^CS(O)_2$-, $(R^C)_2C$=N-, $R^CC(O)O$-, $R^COC(O)$-, $R^CC(O)N(R^N)$-, $(R^N)_2NC(O)$-, halogen, or -H, provided at least one of $R^1$ or $R^8$ is a radical having formula (II), formula (III), or formula (IV) where $R^C$, $R^N$, and $R^P$ are as defined above.

In formula (I), each of $R^{2-4}$, $R^{5-7}$, and $R^{9-16}$ is independently selected from $(C_1\text{-}C_{40})$hydrocarbyl, $(C_1\text{-}C_{40})$heterohydrocarbyl, $-Si(R^C)_3$, $-Ge(R^C)_3$, $-P(R^P)_2$, $-N(R^N)_2$, $-N=CHR^C$, $-OR^C$, $-SR^C$, $-NO_2$, -CN, $-CF_3$, $R^CS(O)$-, $R^CS(O)_2$-, $(R^C)_2C$=N-, $R^CC(O)O$-, $R^COC(O)$-, $R^CC(O)N(R^N)$-, $(R^C)_2NC(O)$-, halogen, and -H where $R^C$, $R^N$, and $R^P$ are as defined above.

The catalyst system comprising a metal-ligand complex of formula (I) may be rendered catalytically active by any technique known in the art for activating metal-based catalysts of olefin polymerization reactions. For example, a metal-ligand complex of formula (I) may be rendered catalytically active by contacting the complex to, or combining the complex with, an activating co-catalyst. Suitable activating co-catalysts for use herein include alkyl aluminums; polymeric or oligomeric alumoxanes (also known as aluminoxanes); neutral Lewis acids; and non-polymeric, noncoordinating, ion-forming compounds (including the use of such compounds under oxidizing conditions). A suitable activating technique is bulk electrolysis. Combinations of one or more of the foregoing activating co-catalysts and techniques are also contemplated. The term "alkyl aluminum" means a monoalkyl aluminum dihydride or monoalkylaluminum dihalide, a dialkyl aluminum hydride or dialkyl aluminum halide, or a trialkylaluminum. Examples of polymeric or oligomeric alumoxanes include methylalumoxane, triisobutylaluminum-modified methylalumoxane, and isobutylalumoxane.

Lewis acid activators (co-catalysts) include Group 13 metal compounds containing from 1 to 3 $(C_1\text{-}C_{20})$hydrocarbyl substituents as described herein. In one embodiment, Group 13 metal compounds are tri($(C_1\text{-}C_{20})$hydrocarbyl)-substituted-aluminum or tri($(C_1\text{-}C_{20})$hydrocarbyl)-boron compounds. In other embodiments, Group 13 metal compounds are tri(hydrocarbyl)-substituted-aluminum, tri($(C_1\text{-}C_{20})$hydrocarbyl)-boron compounds, tri($(C_1\text{-}C_{10})$alkyl)aluminum, tri($(C_6\text{-}C_{18})$aryl)boron compounds, and halogenated (including perhalogenated) derivatives thereof. In further embodiments, Group 13 metal compounds are tris(fluoro-substituted phenyl)boranes, tris(pentafluorophenyl)borane. In some embodiments, the activating co-catalyst is a tris($(C_1\text{-}C_{20})$hydrocarbyl borate (e.g. trityl tetrafluoroborate) or a tri($(C_1\text{-}C_{20})$hydrocarbyl)ammonium tetra($(C_1\text{-}C_{20})$hydrocarbyl)borane (e.g. bis(octadecyl)methylammonium tetrakis(pentafluorophenyl)borane). As used herein, the term "ammonium" means a nitrogen cation that is a $((C_1\text{-}C_{20})\text{hydrocarbyl})_4N^+$, a $((C_1\text{-}C_{20})\text{hydrocarbyl})_3N(H)^+$, a $((C_1\text{-}C_{20})\text{hydrocarbyl})_2N(H)_2^+$, $(C_1\text{-}C_{20})\text{hydrocarbyl}N(H)_3^+$, or $N(H)_4^+$, wherein each $(C_1\text{-}C_{20})$hydrocarbyl, when two or more are present, may be the same or different.

Combinations of neutral Lewis acid activators (co-catalysts) include mixtures comprising a combination of a tri(($C_1$□$C_4$)alkyl)aluminum and a halogenated tri(($C_6$□$C_{18}$)aryl)boron compound, especially a tris(pentafluorophenyl)borane. Other embodiments are combinations of such neutral Lewis acid mixtures with a polymeric or oligomeric alumoxane, and combinations of a single neutral Lewis acid, especially tris(pentafluorophenyl)borane with a polymeric or oligomeric alumoxane. Ratios of numbers of moles of (metal-ligand complex) : (tris(pentafluoro-phenylborane): (alumoxane) [e.g., (Group 4 metal-ligand complex) :(tris(pentafluoro-phenylborane):(alumoxane)] are from 1:1:1 to 1:10:30, in other embodiments, from 1:1:1.5 to 1:5:10.

The catalyst system comprising the metal-ligand complex of formula (I) may be activated to form an active catalyst composition by combination with one or more co-catalysts, for example, a cation forming co-catalyst, a strong Lewis acid, or combinations thereof. Suitable activating co-catalysts include polymeric or oligomeric aluminoxanes, especially methyl aluminoxane, as well as inert, compatible, noncoordinating, ion forming compounds. Exemplary suitable co-catalysts include, but are not limited to: modified methyl aluminoxane (MMAO), bis(hydrogenated tallow alkyl)methyl, tetrakis(pentafluorophenyl)borate($1^-$) amine, and combinations thereof.

In some embodiments, one or more of the foregoing activating co-catalysts are used in combination with each other. An especially preferred combination is a mixture of a tri($(C_1\text{-}C_4)$hydrocarbyl)aluminum, tri($(C_1\text{-}C_4)$hydrocarbyl)borane, or an ammonium borate with an oligomeric or polymeric alumoxane compound. The ratio of total number of moles of one or more metal-ligand complexes of formula (I) to total number of moles of one or more of the activating co-catalysts is from 1:10,000 to 100:1. In some embodiments, the ratio is at least 1:5000, in some other embodiments, at least 1:1000;

and 10:1 or less, and in some other embodiments, 1:1 or less. When an alumoxane alone is used as the activating co-catalyst, preferably the number of moles of the alumoxane that are employed is at least 100 times the number of moles of the metal-ligand complex of formula (I). When tris(pentafluorophenyl)borane alone is used as the activating co-catalyst, in some other embodiments, the ratio of the number of moles of the tris(pentafluorophenyl)borane that are employed to the total number of moles of one or more metal-ligand complexes of formula (I) is from 0.5: 1 to 10:1, from 1:1 to 6:1, or from 1:1 to 5:1. The remaining activating co-catalysts are generally employed in approximately mole quantities equal to the total mole quantities of one or more metal-ligand complexes of formula (I).

As presently described, polyesters may generally refer to polymers which include ester functional groups. According to one or more embodiments, suitable polyesters may include, without limitation, polyethylene terephthalate (PET), and polybutylene terephthalate (PBT). Commercially available polyesters may include, without limitation, RAMAPET BF 3067 and RAMAPET B0003, each manufactured by Indorama Ventures.

As presently described, polypropylenes, sometimes referred to as propylene-based polymers, refer to polymers comprising greater than 50% by mole of units derived from propylene monomer. This includes propylene-based homopolymers or copolymers (meaning units derived from two or more comonomers). By copolymer is meant that the polymer is a polymer of two, three, or more monomers - i.e. a copolymer, terpolymer, etc. In one or more embodiments, the first monomer may be propylene and the second monomer may be an alpha olefin. Such alpha olefins may have 2 or at least 4 carbon atoms, and, for example, may have up to 20, or up to 10, or up to 8 carbons atoms. Exemplary $\alpha$-olefin comonomers include, but are not limited to, ethylene, 1-butene, 1-pentene, 1-hexene, 1-heptene, 1-octene, 1-nonene, 1-decene, and 4-methyl-1-pentene. Optional third, fourth, or more monomers may be alpha-olefins. According to one or more embodiments, example commercially available polypropylene may include, without limitation, CP360H manufactured by Braskem and ACHIEVE Advanced PP3854 manufactured by Exxon Mobil.

As presently described, polyamides may generally refer to polymers which include amide functional groups. According to one or more embodiments, suitable polyamides may include polyamide-6 and polyamide-6,6, and commercially available suitable polyamides may include, without limitation, CAPRON 1949F manufactured by Allied Corporation.

The materials described herein may be used to form fibers and/or nonwovens, such as spunbond nonwovens. As used herein, "spunbond" refers to fibers formed by extruding a molten thermoplastic polymer composition through a plurality of fine, usually circular, die capillaries as molten threads or filaments into converging high velocity gas streams (e.g., air) which function to attenuate the threads or filaments to reduced diameters. Thereafter, the filaments or threads are carried by the high velocity gas streams and deposited on a collecting surface to form a nonwoven web of randomly dispersed spun fibers with average diameters generally of 5 to 100 microns. The terms "nonwoven," "nonwoven web," and "nonwoven fabric" are used herein interchangeably. "Nonwoven" refers to a web or fabric having a structure of individual fibers or threads which are randomly interlaid, but not in an identifiable manner as is the case for a knitted fabric. In one or more embodiments, the bicomponent fiber is a staple fiber or a spunbond fiber. In additional embodiments, the nonwoven web is a spunbond nonwoven or a carded nonwoven.

Referring again to FIGS. 1A-1F, in one or more embodiments, the primary polymer regions may comprise at least 50 wt.%, at least 60 wt.%, at least 70 wt.%, at least 80 wt.%, at least 90 wt.%, or even at least 95 wt.% of polyethylene. In such embodiments, the primary polymer regions may comprise at least 2.5 wt.%, at least 3 wt.%, at least 4 wt.%, at least 5 wt.%, at least 6 wt.%, at least 7 wt.%, or even at least 7.5 wt.% of polypropylene, polyester, or polyamide. Additionally, the secondary polymer regions may comprise at least 50 wt.%, at least 60 wt.%, at least 70 wt.%, at least 80 wt.%, at least 90 wt.%, or even at least 95 wt.% of polypropylene, polyester, or polyamide. In such embodiments, the secondary polymer regions may comprise at least 2.5 wt.%, at least 3 wt.%, at least 4 wt.%, at least 5 wt.%, at least 6 wt.%, at least 7 wt.%, or even at least 7.5 wt.% of polyethylene. Such embodiments can be said to have "overlapping" composition with respect to the majority materials of the primary polymer regions and secondary polymer regions.

In one or more embodiments described herein, polyethylene may be the "majority component" or "majority material" of the primary polymer regions. Polypropylene, polyester, or polyamide may be the "majority component" or "majority material" of the secondary polymer regions. However, it should be understood that the majority component may include a mixture of polymers in some embodiments. For example, the majority component of the primary polymer regions may be a mixture of polyethylenes.

In one or more embodiments, when the primary polymer regions include polypropylene, polyester, or polyamide, in addition to polyethylene, bicomponent fibers which include two or more secondary polymer regions have better spinnability than those than include only one secondary polymer region. Similarly, when the secondary polymer regions include polyethylene, in addition to polypropylene, polyester, or polyamide, bicomponent fibers which include two or more secondary polymer regions have better spinnability than those than include only one secondary polymer region. Without being bound by theory, it is believed that the decrease in spinnability caused by mixing of the majority materials of the primary polymer regions and secondary polymer regions is mitigated by utilizing bicomponent fiber configurations where the secondary polymer regions are relatively dispersed throughout the cross section of the bicomponent fiber. That is, embodiments that include two or more secondary polymer regions may have a more dispersed area of the

majority material of the secondary polymer regions. For example, the "island in the sea" configuration of FIG. 1A has a more dispersed area of majority material of the secondary polymer regions than the core/sheath or side-by-side arrangements of FIGS. 2A and 2B, respectively, and may have better spinnability. Such fiber geometries with more dispersed secondary polymer regions may include two or more secondary polymer regions.

Now referring to FIG. 3, by way of example, a system 100 is depicted that may be utilized to manufacture nonwoven material 122 from bicomponent fiber 116. The system 100 may include a primary polymer region material feed 104 and a secondary polymer region material feed 110. Into the primary polymer region material feed 104 is fed the precursor to the majority material of the primary polymer regions of the bicomponent fiber 116) and into the secondary polymer region material feed 110 is fed the precursor to the majority material of the secondary polymer regions of the bicomponent fiber 116. The respective feeds, as depicted in FIG. 3, include the primary polymer region majority component feed 102 (fed into the primary polymer region material feed 104), the secondary polymer region majority component feed 108 (fed into the secondary polymer region material feed 110), and the feed nonwoven web material 126 (which can be fed into the primary polymer region material feed 104, the secondary polymer region material feed 110, or both). As is described herein, the feed nonwoven web material 126 may include nonwoven material that includes both the majority component of the primary polymer regions and the majority component of the secondary polymer regions.

The materials fed into the primary polymer region material feed 104 and secondary polymer region material feed 110 are, respectively, passed to the fiber formation device 114 via channel 106 and channel 112. The fiber formation device 114 forms the bicomponent fibers 116. The bicomponent fibers 116 may be stored for some time, or immediately formed into a nonwoven web material 118 in a continuous process. In some embodiments, the newly formed nonwoven web material 118 may be translated in a machining direction depicted by the arrows of FIG. 3 to the region of nonwoven material 120.

In some embodiments, the nonwoven material 120 may be trimmed, such that sized nonwoven material 122 is produced which may eventually be rolled and sold to a downstream producer of goods. The trimmed portion 124, referred to in some embodiments as a "waste portion," may be utilized as the excess feed nonwoven web material 126. In such embodiments, the feed nonwoven web material may be a downstream waste portion of the nonwoven web formed in the process depicted in FIG. 3. In such embodiments, the trimmed portion 124 is effectively recycled back into the system to produce additional fiber. However, since this material includes the primary and secondary polymer region of the fiber, some material of the recycled primary polymer region may end up in the secondary polymer region of the newly produced bicomponent fiber, and vice versa.

As described herein, feed nonwoven material may include nonwoven material which is considered "waste" by, for example, being trimmed from the final product nonwoven material. In additional embodiments, the excess nonwoven material may be portions of any nonwoven material, such as an entire roll of produced bicomponent nonwoven. The term feed should not be necessarily limiting with respect to the source of the nonwoven material. However, it should be understood that the feed nonwoven material generally includes bicomponent fiber comprising two different polymer regions.

As is described herein, in embodiments such as those of FIG. 3, an overlap in material composition between the primary polymer regions and the secondary polymer regions is present. In such embodiments, fiber strength is maintained by utilizing a geometry that includes at least two secondary polymer regions, and in some embodiments, many more than two secondary polymer regions.

## Testing Methods

### Density

Density measurements for the ethylene/alpha-olefin interpolymers are made in accordance with ASTM D792, Method B.

### Melt index (I2)

Melt index (I2) values for the ethylene/alpha-olefin interpolymers are measured in accordance with ASTM D1238 at 190 °C at 2.16 kg. The values are reported in g/10 min, which corresponds to grams eluted per 10 minutes.

### Conventional Gel Permeation Chromatography (conventional GPC) and MWD

The chromatographic system consists of a PolymerChar GPC-IR (Valencia, Spain) high temperature GPC chromatograph equipped with an internal IR5 infra-red detector (IR5). The autosampler oven compartment is set at 160 °C and the column compartment is set at 150 °C. The columns used are 4 Agilent "Mixed A" 30 cm 20-micron linear mixed-bed columns. The chromatographic solvent used is 1,2,4 trichlorobenzene and contains 200 ppm of butylated

hydroxytoluene (BHT). The solvent source is nitrogen sparged. The injection volume used is 200 microliters and the flow rate is 1.0 milliliter/minute.

Calibration of the GPC column set is performed with at least 20 narrow molecular weight distribution polystyrene standards with molecular weights ranging from 580 to 8,400,000 g/mol and are arranged in 6 "cocktail" mixtures with at least a decade of separation between individual molecular weights. The standards are purchased from Agilent Technologies. The polystyrene standards are prepared at 0.025 grams in 50 milliliters of solvent for molecular weights equal to or greater than 1,000,000 g/mol, and 0.05 grams in 50 milliliters of solvent for molecular weights less than 1,000,000 g/mol. The polystyrene standards are dissolved at 80 °C with gentle agitation for 30 minutes. The polystyrene standard peak molecular weights are converted to ethylene/alpha-olefin interpolymer molecular weights using the following equation (as described in Williams and Ward, J. Polym. Sci., Polym. Let., 6, 621(1968)).:

$$M_{polyethylene} = A \times \left(M_{polystyrene}\right)^{B} \qquad \text{(Eq. 1)}$$

where M is the molecular weight, A has a value of 0.4315 and B is equal to 1.0.

A fifth order polynomial is used to fit the respective ethylene/alpha-olefin interpolymer-equivalent calibration points. A small adjustment to A (from approximately 0.39 to 0.44) is made to correct for column resolution and band-broadening effects such that NIST standard NBS 1475 is obtained at a molecular weight of 52,000 g/mol.

The total plate count of the GPC column set is performed with Eicosane (prepared at 0.04 g in 50 milliliters of TCB and dissolved for 20 minutes with gentle agitation). The plate count (Equation 2) and symmetry (Equation 3) are measured on a 200 microliter injection according to the following equations:

$$Plate\ Count = 5.54 \times \left(\frac{RV_{Peak\ Max}}{Peak\ Width\ at\ half\ height}\right)^{2} \qquad \text{(Eq. 2)}$$

where RV is the retention volume in milliliters, the peak width is in milliliters, the Peak Max is the maximum height of the peak, and half height is one half of the height of the peak maximum.

$$Symmetry = \frac{\left(Rear\ Peak\ RV_{one\ tenth\ height} - RV_{Peak\ max}\right)}{\left(RV_{Peak\ Max} - Front\ Peak\ RV_{one\ tenth\ height}\right)} \qquad \text{(Eq. 3)}$$

where RV is the retention volume in milliliters and the peak width is in milliliters, Peak max is the maximum position of the peak, one tenth height is one tenth of the height of the peak maximum, and where rear peak refers to the peak tail at later retention volumes than the Peak max and where front peak refers to the peak front at earlier retention volumes than the Peak max. The plate count for the chromatographic system should be greater than 22,000 and symmetry should be between 0.98 and 1.22.

Samples are prepared in a semi-automatic manner with the PolymerChar "Instrument Control" Software, wherein the samples are weight-targeted at 2 mg/ml, and the solvent (contained 200 ppm BHT) is added to a pre nitrogen-sparged septa-capped vial, via the PolymerChar high temperature autosampler. The samples are dissolved for 3 hours at 160 °C under "low speed" shaking.

The calculations of $M_{n(GPC)}$, $M_{w(GPC)}$, and $M_{z(GPC)}$ are based on GPC results using the internal IR5 detector (measurement channel) of the PolymerChar GPC-IR chromatograph according to Equations 5a-c, using PolymerChar GPCOne™ software, the baseline-subtracted IR chromatogram at each equally-spaced data collection point i ($IR_i$) and the ethylene/alpha-olefin interpolymer equivalent molecular weight obtained from the narrow standard calibration curve for the point i ($M_{polyethylene,i}$ in g/mol) from Equation 1. Subsequently, a GPC molecular weight distribution (GPC-MWD) plot ($wt_{GPC}$(lgMW) vs. lgMW plot, where $wt_{GPC}$(lgMW) is the weight fraction of the interpolymer molecules with a molecular weight of lgMW) can be obtained. Molecular weight is in g/mol and $wt_{GP}c$(lgMW) follows the Equation 4.

$$\int wt_{GPC}(\lg MW)d\lg MW = 1.00 \qquad \text{(Eq. 4)}$$

Number-average molecular weight $M_{n(GPC)}$, weight-average molecular weight $M_{w(GPC)}$ and z-average molecular weight $M_{z(GPC)}$ can be calculated as the following equations.

$$Mn_{(GPC)} = \frac{\sum^{i} IR_i}{\sum^{i}\left(IR_i / M_{polyethylene,\,i}\right)} \quad \text{(Eq. 5a)}$$

$$Mw_{(GPC)} = \frac{\sum^{i}\left(IR_i \times M_{polyethylene,\,i}\right)}{\sum^{i} IR_i} \quad \text{(Eq. 5b)}$$

$$Mz_{(GPC)} = \frac{\sum^{i}\left(IR_i \times M_{polyethylene,\,i}{}^{2}\right)}{\sum^{i}\left(IR_i \times M_{polyethylene,\,i}\right)} \quad \text{(Eq. 5c)}$$

Molecular weight distribution (MWD) is defined as the ratio of Mw/Mn.

In order to monitor the deviations over time, a flow rate marker (decane) is introduced into each sample via a micropump controlled with the PolymerChar GPC-IR system. This flow rate marker (FM) is used to linearly correct the pump flow rate (Flowrate(nominal)) for each sample by RV alignment of the respective decane peak within the sample (RV(FM Sample)) to that of the decane peak within the narrow standards calibration (RV(FM Calibrated)). Any changes in the time of the decane marker peak are then assumed to be related to a linear-shift in flow rate (Flowrate(effective)) for the entire run. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flow rate (with respect to the narrow standards calibration) is calculated as Equation 6. Processing of the flow marker peak is done via the PolymerChar GPCOne™ Software. Acceptable flow rate correction is such that the effective flowrate should be within 0.5% of the nominal flowrate.

$$Flow\ Rate_{effective} = Flow\ Rate_{nominal} \times \left(RV(FM_{calibrated})/RV\left(FM_{sample}\right)\right) \quad \text{(Eq. 6)}$$

$^{1}$H NMR Method (quantitative measurement of vinyl unsaturation)

A stock solution (3.26 g) is added to 0.133 g of the polymer sample in 10 mm NMR tube. The stock solution is a mixture of tetrachloroethane-d2 (TCE) and perchloroethylene (50:50 in weight) with 0.001M $Cr^{3+}$. The solution in the tube is purged with $N^2$, for 5 minutes, to reduce the amount of oxygen. The capped sample tube is left at room temperature, overnight, to swell the polymer sample. The sample is dissolved at 110°C with periodic vortex mixing. The samples are free of the additives that may contribute to unsaturation, for example, slip agents such as erucamide. Each $^{1}$H NMR analysis is run with a 10 mm cryoprobe, at 120°C, on Bruker AVANCE 400 MHz spectrometer.

Two experiments are run to measure unsaturation: one control and one double presaturation experiment. For the control experiment, the data are processed with an exponential window function with 1 Hz line broadening and the baseline is corrected from about 7 to -2 ppm. The signal from residual 1H of TCE is set to 100, the integral (Itotal) from about -0.5 to 3 ppm is used as the signal from the whole polymer in the control experiment. The number of total carbons, NC, in the polymer is calculated as follows in Equation 7:

$$NC = I_{total}/2 \quad \text{(Eq. 7)}$$

For the double presaturation experiment, the data are processed with an exponential window function with 1 Hz line broadening, and the baseline is corrected from about 6.6 to 4.5 ppm. The signal from residual $^{1}$H of TCE is set to 100, and the corresponding integrals for unsaturations ($I_{vinylene}$, $I_{trisubstituted}$, $I_{vinyl}$ and $I_{vinylidene}$) are integrated. It is well known to use NMR spectroscopic methods for determining polyethylene unsaturation, for example see Busico, V., et al., Macromolecules, 2005, 38, 6988. The number of unsaturation unit for vinylene, trisubstituted, vinyl and vinylidene are calculated as follows:

$$N_{vinylene} = I_{vinylene}/2 \quad \text{(Eq. 8a),}$$

$$N_{trisubstituted} = I_{trisubstitute} \quad \text{(Eq. 8b)},$$

$$N_{vinyl} = I_{vinyl}/2 \quad \text{(Eq. 8c)},$$

$$N_{vinylidene} = I_{vinylidene}/2 \quad \text{(Eq. 8d)}.$$

The unsaturation units per 1,000 total carbons, i.e., all polymer carbons including backbone and branches, are calculated as:

$$N_{vinylene}/1{,}000C = (N_{vinylene}/NC)*1{,}000 \quad \text{(Eq. 9a)},$$

$$N_{trisubstituted}/1{,}000C = (N_{trisubstituted}/NC)*1{,}000 \quad \text{(Eq. 9b)},$$

$$N_{vinyl}/1{,}000C = (N_{vinyl}/NCH_2)*1{,}000 \quad \text{(Eq. 9c)},$$

$$N_{vinylidene}/1{,}000C = (N_{vinylidene}/NC)*1{,}000 \quad \text{(Eq. 9d)}.$$

The chemical shift reference is set at 6.0 ppm for the $^1$H signal from residual proton from TCE-d2. The control is run with a ZG pulse, NS=4, DS=12, SWH=10,000 Hz, AQ=1.64s, D1=14s. The double presaturation experiment is run with a modified pulse sequence, with O1P=1.354 ppm, O2P=0.960 ppm, PL9=57db, PL21=70 db, NS=100, DS=4, SWH=10,000 Hz, AQ=1.64s, D1=1s (where D1 is the presaturation time), D13=13s.

Denier measurement

Fiber size is measured via optical microscopy. Denier (defined as the weight of such fiber for 9000 meter) is calculated based on the density of each polymer component and fiber size.

Filament Speed Determination

Filament speed is calculated based on the following equation:

$$\text{Filament Speed (meter per minute)} = \text{throughput rate (g/min)/denier(g/9000m)}*9000 \quad \text{(Eq. 10)}$$

**Examples**

The examples are representative of embodiments of the presently disclosed subject matter, and are not meant as limiting on the scope of the claims.

Example 1 - Bicomponent Fiber Recycling

Bicomponent fibers were produced with core/sheath (CS) geometry and "island in the sea" (INS) geometry. Specifically, 20 gram/square meter bicomponent fiber nonwovens were produced on a single beam REICOFIL 4 spunbond line in a Core/Sheath or "Island in the sea" configuration. The machine (REICOFIL 4 spunbond line) was equipped with a spinneret having 7022 holes (6861 holes/m) and an exit diameter of each hole of 0.6 mm. The hole had an LID ratio of 4. Throughput was kept constant at 0.56 ghm (gram per hole per minute). In this bicomponent spinning system, the Core/Sheath fiber structure was produced as follows: The primary region extruder was fed with various polyethylenes and the secondary extruder was fed with polypropylene or a polypropylene/polyethylene (92.5/7.5 weight ratio) blend. The primary region and secondary region has a 50:50 ratio by weight. The polypropylene used in this example was a

homopolymer polypropylene (PP) available from Braskem under the name Polypropylene CP360H. The polymer in the secondary region was extruded at 246° C. The primary region polymer was extruded at 233° C. Channels in the spin pack divided the polymer flows and delivered both polymers to each spinneret backhole in an arrangement that createed a concentric sheath/core cross section with a core (secondary region) surrounded by a sheath (primary region). Upon exiting the spinneret, the fibers were quenched at 23° C. In the "island in the sea" configuration, there were 33 islands (secondary region) in one sea (primary region). Recyclability test was performed by blending 7.5 wt% of polyethylene and 92.5 wt% of PP and extruding the blend in the secondary region. Cabin pressure and/or air quench was adjusted to maintain stable fiber spinning with no breaks. Spinning stability (or spinnability) was determined where no repeated fiber breaks occur by visual inspection. The experiment was repeated with three different polyethylenes: ASPUN™ 6000, ASPUN™ 6850, and the polymer produced in Example 3. Processing conditions and fiber spinning observations are documented in Table 1.

As shown in Table 1, all "island in the sea" fiber structures allow at least up to 7.5 wt.% of polyethylene incorporation into the PP islands. When 7.5 wt.% of polyethylene was introduced into the PP islands, process conditions were adjusted accordingly (cabin pressure and air quench) and stable fiber spinning could be achieved with reasonable denier of about 2-3 g/9000 m. On the other hand, none of the comparative, core/sheath structures allowed PE incorporation into the PP core at 7.5 wt.%. Significant fiber breaks were observed regardless of process condition adjustments. This comparison demonstrates the advantages of the presently disclosed embodiments using "island in the sea" fiber structure in improving bicomponent nonwoven recycling.

**Table 1**

| Primary region | Secondary region | Fiber Configuration | Cabin pressure (Pa) | Air output ratio, % | Flow rate top, $m^3/h/m$ | Flow rate bottom, $m^3/h/m$ | Fiber D. (micron ) | Denier (g/ 900 0m) | Observation |
|---|---|---|---|---|---|---|---|---|---|
| Aspun 6000 | PP | CS | 3000 | 100 | 1189 | 4125 | 16.6 | 1.8 | No break |
| Aspun 6000 | 92.5 wt.% PP / 7.5 wt.% Aspun 6000 | CS | Not able to run at all | Not able to run at all | Not able to run at all | Not able to run at all | - | - | break |
| Aspun 6850 | PP | CS | 3000 | 101 | 1222 | 4065 | 150 | 1.5 | No break |
| Aspun 6850 | 92.5 wt.% PP / 7.5 wt.% Aspun 6850 | CS | Not able to run at all | Not able to run at all | Not able to run at all | Not able to run at all | - | - | break |
| Interpolymer Ex.3 | 92.5 wt.% PP / 7.5 wt.% interpolymer Ex.3 | CS | Not able to run at all | Not able to run at all | Not able to run at all | Not able to run at all | - | - | Break |
| Aspun 6850/ | PP | INS | 7000 | 89% | 1223 | 8530 | 17.4 | 20 | No break |
| Aspun 6850/ | 92.5 wt.% PP / 7.5 wt.% Aspun 6850 | INS | 4300 | 86% | 529 | 7170 | 19.2 | 2.4 | No break |
| Interpolymer Ex.3 | PP | INS | 8500 | 86% | 427 | 9861 | 15.8 | 1.6 | No break |
| Interpolymer Ex.3 | 92.5 wt.% PP / 7.5 wt.% interpolymer Ex.3 | INS | 3600 | 100% | 1610 | 5694 | 20.2 | 2.7 | No break |

Example 2 - Bicomponent Fiber Recycling

Bicomponent fibers were produced with core/sheath (CS) geometry and "island in the sea" (INS) geometry. Specifically, fibers were spun on a Hills Bicomponent Continuous Filament Fiber Spinning Line at a throughput rate of 0.6 grams/hole/minute (ghm). The primary region extruder was fed with various polyethylenes and the secondary extruder was fed with polypropylene or a polypropylene/polyethylene (92.5/7.5 weight ratio) blend. The primary region and secondary region has a 50:50 ratio by weight. The polypropylene used in this example was a homopolymer polypropylene (PP) available from Braskem under the name Polypropylene CP360H. The polyethylene used was ASPUN™ 6000 available from The Dow Chemical Company.

The Hills Bicomponent die consisted of 144 holes, with a hole diameter of 0.6 mm. The hole had a LID of 4/1. Quench air temperature and flow rate were set at 15 °C and a maximum of 375 cfm (cubic feet per minute) (1 cfm = 1.699 $m^3$/h), respectively. Extruder profiles were adjusted to achieve a melt temperature of 240°C. Filaments were drawn using an air aspirator, starting at 60 psi (1 psi = 6894.76 Pa) slot pressure. Quench air flow was started at 375 cfm. When severe fiber break was observed, the slot pressure and/or the air flow was decreased to achieve stable fiber spinning. Channels in the spin pack divided the polymer flows and delivered both polymers to each spinneret backhole in an arrangement that createed a concentric sheath/core cross section with a core (secondary region) surrounded by a sheath (primary region). Upon exiting the spinneret, the fibers were quenched at 23° C. In the "island in the sea" configuration, there were 33 islands (secondary region) in one sea (primary region). Recyclability test was performed by blending polyethylene and PP and extruding the blend in the secondary region. Spinning stability (or spinnability) was determined by visual inspection. Processing conditions and fiber spinning observations are documented in Table 2.

As shown in Table 2, at the maximal slot pressure and air quench, Aspun 6000/PP in CS fiber structure could not spin without significant fiber breaks. Stable spinning was obtained when cabin pressure was reduced to 40 psi. With "island in the sea" fiber structure, Aspun 6000/PP exhibited better spinnability with stability at the maximal slot pressure (60 psi) and air quench. Due to the line capacity, the maximum slot pressure achievable was 60 psi. At this slot pressure, the "island in the sea" fiber structure produced a slightly thicker fiber, resulting in slightly slower filament speed. With higher slot pressure, "island in the sea" fiber structure was able to produce similar denier fiber compared to core/sheath.

With recycling, a difference was seen comparing core/sheath and "island in the sea" fiber structures. At a 7.5 wt.% PE incorporation (to the PP core), core/sheath structure exhibited significant fiber break. Fiber break is only alleviated but not eliminated by reducing the air quench to 0 cfm. On the other hand, "island in the sea" fiber structure allowed a recycling of up to 10 wt.% PE (into the PP islands) while maintaining stable fiber spinning with the same filament speed when appropriate adjustments are made to the process conditions.

**Table 2**

| Primary region | Secondary region | Fiber Configuration | Air quench, cfm (cubic feet per minute) | Slot pressure (psi) | Fiber diameter (micron) | Denier (g/ 9000m) | Filament speed (m/min) | Observation |
|---|---|---|---|---|---|---|---|---|
| Aspun 6000 | PP | CS | 375 | 60 | - | - | - | severe break |
| Aspun 6000 | PP | CS | 375 | 40 | 17.3 | 20 | 2759.3 | No break |
| Aspun 6000 | 92.5 wt.% PP / 7.5 wt. % Aspun 6000 | CS | 375 | 40 | - | - | - | severe break |
| Aspun 6000 | 92.5 wt.% PP / 7.5 wt. % Aspun 6000 | CS | 176 | 40 | - | - | - | severe break |
| Aspun 6000 | 92.5 wt.% PP / 7.5 wt. % Aspun 6000 | CS | 0 | 40 | 16.4 | 18 | 3059 | 3 breaks/min |
| Aspun 6000 | PP | INS | 375 | 60 | 212 | 2.9 | 1838 | No break |
| Aspun 6000 | 90 wt.% PP / 10 wt.% Aspun 6000 | INS | 375 | 50 | 21.1 | 2.9 | 1862 | No break |
| Aspun 6000 | 90 wt.% PP / 10 wt.% Aspun 6000 | INS | 312 | 60 | 21.7 | 3.1 | 1754 | No break |

Example 3 - Production of ethylene/alpha-olefin interpolymer compositions

All raw materials (ethylene monomer and 1-octene comonomer) and the process solvent (a narrow boiling range high-purity isoparaffinic solvent, product name Isopar-E commercially available from ExxonMobil Chemical) were purified with molecular sieves before introduction into the reaction environment. Hydrogen was supplied pressurized as a high purity grade and is not further purified. The reactor ethylene feed stream was pressurized via a mechanical compressor to above reaction pressure. The solvent and comonomer feed were pressurized via a pump to above reaction pressure. The individual catalyst components were manually batch diluted to suitable component concentrations with purified solvent and pressured to above reaction pressure. All reaction feed flows were measured with mass flow meters and independently controlled with computer automated valve control systems.

A two reactor system was used in a series configuration. Each continuous solution polymerization reactor consisted of a liquid full, non-adiabatic, isothermal, circulating, loop reactor which mimics a continuously stirred tank reactor (CSTR) with heat removal. Independent control of all fresh solvent, ethylene, hydrogen, and catalyst component feeds was possible. The total fresh feed stream to each reactor (solvent, ethylene, 1-octene, and hydrogen) was temperature controlled to maintain a single solution phase by passing the feed stream through a heat exchanger. The total fresh feed to each polymerization reactor was injected into the reactor at two locations with approximately equal reactor volumes between each injection location. The fresh feed was controlled with each injector receiving half of the total fresh feed mass flow. The catalyst components were injected into the polymerization reactor through specially designed injection stingers. The primary catalyst (pre-catalyst) component feed was computer controlled to maintain each reactor ethylene conversion at the specified targets. The cocatalyst components were fed based on calculated specified molar ratios to the primary catalyst (pre-catalyst) component. Immediately following each reactor feed injection location, the feed streams were mixed with the circulating polymerization reactor contents with static mixing elements. The contents of each reactor were continuously circulated through heat exchangers responsible for removing much of the heat of reaction and with the temperature of the coolant side responsible for maintaining an isothermal reaction environment at the specified temperature. Circulation around each reactor loop was provided by a pump.

In dual series reactor configuration the effluent from the first polymerization reactor (containing solvent, ethylene, 1-octene, hydrogen, catalyst components, and polymer) exited the first reactor loop and was added to the second reactor loop.

The second reactor effluent entered a zone where it is deactivated with the addition of and reaction with water. Following catalyst deactivation and additive addition, the reactor effluent entered a devolatization system where the polymer was removed from the non-polymer stream. The isolated polymer melt was pelletized and collected. The non-polymer stream passed through various pieces of equipment which separate most of the ethylene which was removed from the system. Most of the solvent and unreacted 1-octene was recycled back to the reactor after passing through a purification system. A small amount of solvent and 1-octene was purged from the process.

The reactor stream feed data flows that correspond to the values in Table 3 were used to produce the examples. The data are presented such that the complexity of the solvent recycle system is accounted for and the reaction system can be treated more simply as a once through flow diagram. Catalyst components used are referenced in Table 4.

Each of the polymers made is tested for various properties according to the methods set forth above.

**Table 3 - Production Conditions of Example 3 polymer**

| | Units | Ex. 3 |
|---|---|---|
| First Reactor Feed Solvent / Ethylene Mass Flow Ratio | g/g | 3.1 |
| First Reactor Feed 1-octene / Ethylene Mass Flow Ratio | g/g | 0.33 |
| First Reactor Feed Hydrogen / Ethylene Mass Flow Ratio | g/g | 3.3E-04 |
| First Reactor Temperature | °C | 160 |
| First Reactor Pressure | barg | 40 |
| First Reactor Ethylene Conversion | % | 89.7 |
| First Reactor Catalyst Type | Type | Pro-catalyst 1 |
| First Reactor Co-Catalyst 1 Type | Type | Co-catalyst 1 |
| First Reactor Co-Catalyst 2 Type | Type | Co-catalyst 2 |
| First Reactor Co-Catalyst 1 to Catalyst Molar Ratio (B to Zr ratio) | Ratio | 1.2 |
| First Reactor Co-Catalyst 2 to Catalyst Molar Ratio (Al to Zr ratio) | Ratio | 39.2 |

(continued)

| | Units | Ex. 3 |
|---|---|---|
| First Reactor Residence Time | min | 17.8 |
| | | |
| Second Reactor Feed Solvent / Ethylene Mass Flow Ratio | g/g | 2.5 |
| Second Reactor Feed 1-octene/ Ethylene Mass Flow Ratio | g/g | 0.134 |
| Second Reactor Feed Hydrogen / Ethylene Mass Flow Ratio | g/g | 6.3E-04 |
| Second Reactor Temperature | °C | 195 |
| Second Reactor Pressure | barg | 40 |
| Second Reactor Ethylene Conversion | % | 91.6 |
| Second Reactor Catalyst Type | Type | Pro-catalyst 2 |
| Second Reactor Co-Catalyst 1 Type | Type | Co-catalyst 1 |
| Second Reactor Co-Catalyst 2 Type | Type | Co-catalyst 2 |
| Second Reactor Co-Catalyst 1 to Catalyst Molar Ratio (B to Zr ratio) | mol/mol | 5.5 |
| Second Reactor Co-Catalyst 2 to Catalyst Molar Ratio (Al to Zr ratio) | mol/mol | 2248.8 |
| Second Reactor Residence Time | min | 7.5 |

**Table 4 - Catalyst systems for Example 3 polymer**

| | |
|---|---|
| Pro-Catalyst 1 | 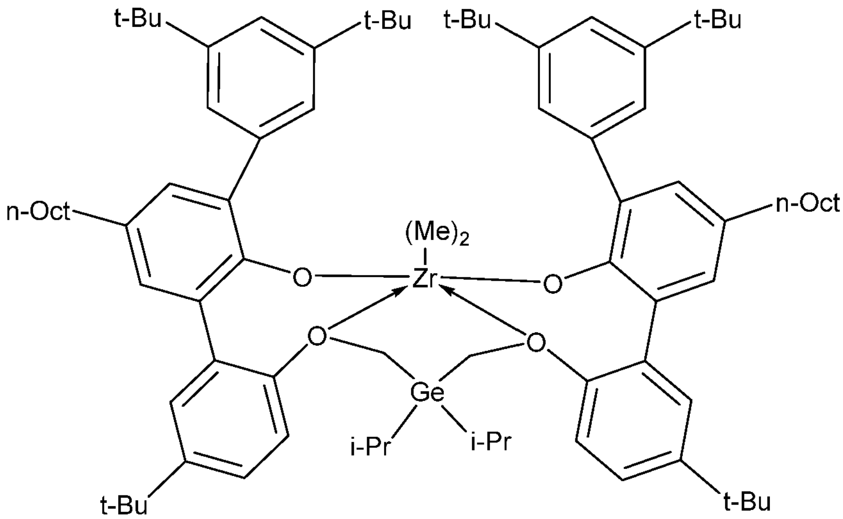 Zirconium, dimethyl[[2,2‴-[[bis[1-methylethyl)germylene]bis(methyleneoxy-kO)]bis[3",5,5"-tris(1,1-dimethylethyl)-5'-octyl[1,1':3',1"-terphenyl]-2'-olato-kO]](2-)] |

(continued)

| | |
|---|---|
| Pro-Catalyst 2 | 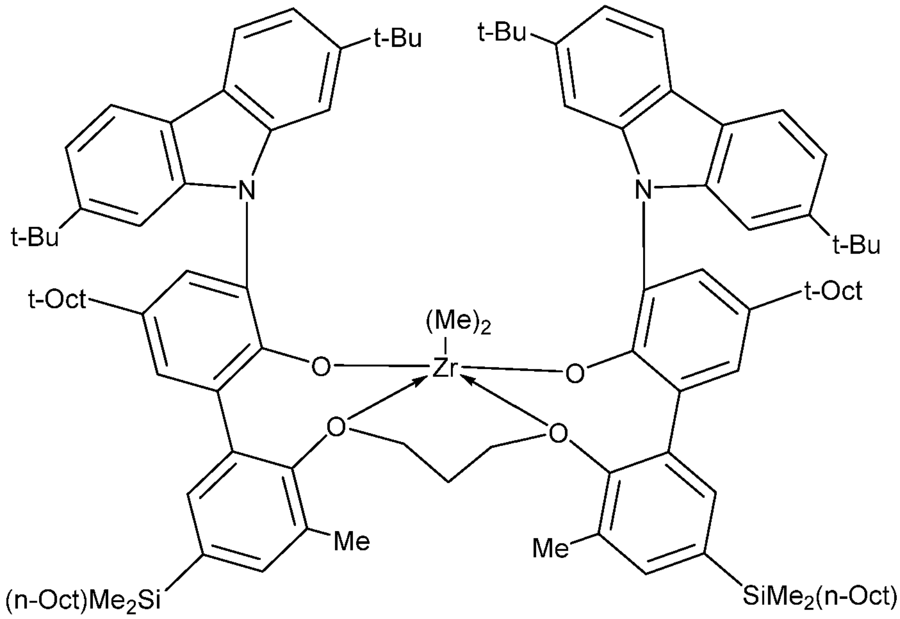 |
| | Zirconium, dimethyl [[2,2'''-[1,3-propanediylbis(oxy-kO)]bis[3-[2,7-bis(1,1-dimethylethyl)-9H-carbazol-9-yl]]-5'-(dimethyloctylsilyl)-3'-methyl-5-(1,1,3,3-tetramethylbutyl)[1,11-biphenyl]-2-olato-kO]](2-)]- |
| Co-catalyst 1 | bis(hydrogenated tallow alkyl)methylammonium tetrakis(pentafluorophenyl)borate(1-) |
| Co-catalyst 2 | Aluminoxanes, iso-Bu Me, branched, cyclic and linear; modified methyl aluminoxane |

Example 4

Properties for several contemplated polyethylene materials are reported in Table 5. In one or more embodiments, the polyethylene may be within plus or minus 5%, 10%, 20% of any of the quantified properties of Table 5. For example, the polyethylene may have a density of within 5%, 10%, or 20% of 0.935 g/cc, etc.

**Table 5**

| Resin | Density (g/cc) | Melt Index (I2) (g/10min) | MWD (Mw/Mn) | Vinyl Unsaturation Per $10^6$ carbons |
|---|---|---|---|---|
| Aspun 6000 | 0.935 | 19 | 2.7 | 235 |
| Aspun 6850 | 0.955 | 30 | 3.1 | 353 |
| Example 3 interpolymer | 0.935 | 21 | 2.3 | 143 |

For the purposes of describing and defining the present invention it is noted that the terms "about" or "approximately" are utilized herein to represent the inherent degree of uncertainty that may be attributed to any quantitative comparison, value, measurement, or other representation. The term is also utilized herein to represent the degree by which a quantitative representation may vary from a stated reference without resulting in a change in the basic function of the subject matter at issue.

It is noted that one or more of the following claims utilize the term "wherein" as a transitional phrase. For the purposes of defining the present invention, it is noted that this term is introduced in the claims as an open-ended transitional phrase that is used to introduce a recitation of a series of characteristics of the structure and should be interpreted in like manner as the more commonly used open-ended preamble term "comprising."

It will be apparent to those skilled in the art that various modifications and variations can be made to the present invention without departing from the scope of the invention. Since modifications combinations, sub-combinations and variations of the disclosed embodiments incorporating the substance of the invention may occur to persons skilled in the art, the invention should be construed to include everything within the scope of the appended claims.

## Claims

1. A process for manufacturing a nonwoven web, the process comprising:

   forming a bicomponent fiber, the bicomponent fiber comprising one or more primary polymer regions and two or more secondary polymer regions, wherein:

      the primary polymer regions comprise polyethylene;
      the secondary polymer regions comprise polypropylene, polyester, or polyamide;
      the primary polymer regions comprise at least 2.5 wt.% of polypropylene, polyester, or polyamide, or the secondary polymer regions comprise at least 2.5 wt.% of polyethylene, or both;
      when the primary polymer regions comprise at least 2.5 wt.% of polypropylene, polyester, or polyamide, the primary polymer regions are at least partially formed from a feed nonwoven web material;
      when the secondary polymer regions comprise at least 2.5 wt.% of polyethylene, the secondary polymer regions are at least partially formed from the feed nonwoven web material; and
      the feed nonwoven web material comprises:

         polyethylene; and
         polypropylene, polyester, or polyamide; and

   forming the bicomponent fiber into the nonwoven web.

2. The process of claim 1, wherein the bicomponent fiber comprises at least 15 secondary polymer regions in an "island-in-the-sea" geometry.

3. The process of claims 1 or 2, wherein the feed nonwoven web material is a waste portion of the nonwoven web formed in the process of claim 1.

4. The process of any of claims 1-3, wherein the bicomponent fiber is a staple fiber or a spunbond fiber.

5. The process of any of claims 1-4, wherein the nonwoven web is a spunbond nonwoven or a carded nonwoven.

6. The process of any of claims 1-5, wherein:

   the primary polymer regions comprise at least 5 wt.% of polypropylene, polyester, or polyamide; or
   the secondary polymer regions comprise at least 5 wt.% of polyethylene;
   or both.

7. The process of any of claims 1-6, wherein:

   the primary polymer regions comprise at least 80 wt.% of polyethylene; and
   the secondary polymer regions comprise at least 80 wt.% of polypropylene, polyester, or polyamide.

8. The process of claim 1, the process comprising:

   forming a bicomponent fiber by feeding polyethylene into a primary polymer region material feed and polypropylene, polyester, or polyamide into a secondary polymer region material feed of a fiber forming device, the bicomponent fiber comprising one or more primary polymer regions each formed from the polyethylene and two or more secondary polymer regions formed from the polypropylene, polyester, or polyamide;
   removing a waste portion of the nonwoven web, the waste portion comprising:

      polyethylene; and

polypropylene, polyester, or polyamide;

feeding at least some of the waste portion into the fiber forming machine such that bicomponent fiber is formed, wherein:

the primary polymer regions comprise at least 2.5 wt.% of polypropylene, polyester, or polyamide; or
the secondary polymer regions comprise at least 2.5 wt.% of polyethylene;
or both.

**9.** The process of claim 8, wherein the bicomponent fiber comprises at least 15 secondary polymer regions in an "island-in-the-sea" geometry.

**10.** The process of claims 8 or 9, wherein:

the primary polymer regions comprise at least 5 wt.% of polypropylene, polyester, or polyamide; or
the secondary polymer regions comprise at least 5 wt.% of polyethylene;
or both.

**11.** The process of any of claims 8-10, wherein:

the primary polymer regions comprise at least 80 wt.% of polyethylene; and
the secondary polymer regions comprise at least 80 wt.% of polypropylene, polyester, or polyamide.

**12.** A nonwoven web formed from bicomponent fiber, wherein the bicomponent fiber comprises:

one or more primary polymer regions and two or more secondary polymer regions, wherein:

the primary polymer regions comprise at least 80 wt.% polyethylene;
the secondary polymer regions comprise at least 80 wt.% polypropylene, polyester, or polyamide; and

wherein:

the primary polymer regions comprise at least 2.5 wt.% of polypropylene, polyester, or polyamide, and the primary polymer region is at least partially formed from a feed nonwoven web material comprising (a) polyethylene and (b) polypropylene, polyester, or polyamide; or
the secondary polymer regions comprise at least 2.5 wt.% of polyethylene, and the secondary polymer region is at least partially formed from a feed nonwoven web material comprising (a) polyethylene and (b) polypropylene, polyester, or polyamide;
or both.

**13.** The nonwoven web of claim 12, wherein the bicomponent fiber comprises at least 15 secondary polymer regions in an "island-in-the-sea" geometry.

**14.** The nonwoven web of claim 12 or 13, wherein:

the primary polymer regions comprise at least 5 wt.% of polypropylene, polyester, or polyamide; or
the secondary polymer regions comprise at least 5 wt.% of polyethylene;
or both.

## Patentansprüche

**1.** Verfahren zum Herstellen einer Vliesbahn, das Verfahren umfassend:
Bilden einer Zweikomponentenfaser, die Zweikomponentenfaser umfassend eine oder mehrere primäre Polymerbereiche und zwei oder mehr sekundäre Polymerbereiche, wobei:

die primären Polymerbereiche Polyethylen umfassen;
die sekundären Polymerbereiche Polypropylen, Polyester oder Polyamid umfassen;

die primären Polymerbereiche zu mindestens 2,5 Gew.-% Polypropylen, Polyester oder Polyamid umfassen oder die sekundären Polymerbereiche zu mindestens 2,5 Gew.-% Polyethylen oder beides umfassen;
wenn die primären Polymerbereiche zu mindestens 2,5 Gew.-% Polypropylen, Polyester oder Polyamid umfassen, die primären Polymerbereiche mindestens teilweise aus einem Zufuhrvliesbahnmaterial gebildet sind;
wenn die sekundären Polymerbereiche zu mindestens 2,5 Gew.-% Polyethylen umfassen, die sekundären Polymerbereiche mindestens teilweise aus einem Zufuhrvliesbahnmaterial gebildet sind; und
das Zufuhrvliesbahnmaterial umfasst:

Polyethylen; und
Polypropylen, Polyester oder Polyamid; und
Bilden der Zweikomponentenfaser in die Vliesbahn.

**2.** Verfahren nach Anspruch 1, wobei die Zweikomponentenfaser mindestens 15 sekundäre Polymerbereiche in einer "Insel-im-Meer"-Geometrie umfasst.

**3.** Verfahren nach Anspruch 1 oder 2, wobei das Zufuhrvliesbahnmaterial ein Abfallabschnitt der Vliesbahn ist, die in dem Verfahren nach Anspruch 1 gebildet wird.

**4.** Verfahren nach einem der Ansprüche 1 bis 3, wobei die Zweikomponentenfaser eine Stapelfaser oder eine Spinnvliesfaser ist.

**5.** Verfahren nach einem der Ansprüche 1 bis 4, wobei die Vliesbahn ein Spinnvlies oder ein kardiertes Vlies ist.

**6.** Verfahren nach einem der Ansprüche 1 bis 5, wobei:

die primären Polymerbereiche zu mindestens 5 Gew.-% Polypropylen, Polyester oder Polyamid umfassen; oder
die sekundären Polymerbereiche zu mindestens 5 Gew.-% Polyethylen umfassen;
oder beides.

**7.** Verfahren nach einem der Ansprüche 1 bis 6, wobei:

die primären Polymerbereiche zu mindestens 80 Gew.-% Polyethylen umfassen; und
die sekundären Polymerbereiche zu mindestens 80 Gew.-% Polypropylen, Polyester oder Polyamid umfassen.

**8.** Verfahren nach Anspruch 1, das Verfahren umfassend:

Bilden einer Zweikomponentenfaser durch Zuführen von Polyethylen in eine primäre Polymerbereichsmaterialzuführung und Polypropylen, Polyester oder Polyamid in eine sekundäre Polymerbereichsmaterialzuführung einer Faserbildungsvorrichtung, die Zweikomponentenfaser umfassend einen oder mehrere primäre Polymerbereiche umfasst, die jeweils aus dem Polyethylen gebildet sind und zwei oder mehr sekundären Polymerbereichen, die aus dem Polypropylen, Polyester oder Polyamid gebildet sind;
Entfernen eines Abfallabschnitts der Vliesbahn, der Abfallabschnitt umfassend:

Polyethylen; und
Polypropylen, Polyester oder Polyamid;

Zuführen mindestens eines Teils des Abfallabschnitts in die Faserbildungsmaschine, sodass die Zweikomponentenfaser gebildet wird, wobei:

die primären Polymerbereiche zu mindestens 2,5 Gew.-% Polypropylen, Polyester oder Polyamid umfassen; oder
die sekundären Polymerbereiche zu mindestens 2,5 Gew.-% Polyethylen umfassen;
oder beides.

**9.** Verfahren nach Anspruch 8, wobei die Zweikomponentenfaser mindestens 15 sekundäre Polymerbereiche in einer "Insel-im-Meer"-Geometrie umfasst.

**10.** Verfahren nach Anspruch 8 oder 9, wobei:

die primären Polymerbereiche zu mindestens 5 Gew.-% Polypropylen, Polyester oder Polyamid umfassen; oder
die sekundären Polymerbereiche zu mindestens 5 Gew.-% Polyethylen umfassen;
oder beides.

**11.** Verfahren nach einem der Ansprüche 8 bis 10, wobei:

die primären Polymerbereiche zu mindestens 80 Gew.-% Polyethylen umfassen; und
die sekundären Polymerbereiche zu mindestens 80 Gew.-% Polypropylen, Polyester oder Polyamid umfassen.

**12.** Vliesbahn, die aus Zweikomponentenfaser gebildet ist, wobei die Zweikomponentenfaser umfasst:

einen oder mehrere primäre Polymerbereiche und zwei oder mehr sekundäre Polymerbereiche, wobei:

die primären Polymerbereiche zu mindestens 80 Gew.-% Polyethylen umfassen;
die sekundären Polymerbereiche zu mindestens 80 Gew.-% Polypropylen, Polyester oder Polyamid umfassen; und

wobei:

die primären Polymerbereiche zu mindestens 2,5 Gew.-% Polypropylen, Polyester oder Polyamid umfassen und der primäre Polymerbereich mindestens teilweise aus einem Zufuhrvliesbahnmaterial gebildet ist, umfassend (a) Polyethylen und (b) Polypropylen, Polyester oder Polyamid; oder
die sekundären Polymerbereiche zu mindestens 2,5 Gew.-% Polyethylen umfassen und der sekundäre Polymerbereich mindestens teilweise aus einem Zufuhrvliesbahnmaterial gebildet ist, umfassend (a) Polyethylen und (b) Polypropylen, Polyester oder Polyamid umfasst;
oder beides.

**13.** Vliesbahn nach Anspruch 12, wobei die Zweikomponentenfaser mindestens 15 sekundäre Polymerbereiche in einer "Insel-im-Meer"-Geometrie umfasst.

**14.** Vliesbahn nach Anspruch 12 oder 13, wobei:

die primären Polymerbereiche zu mindestens 5 Gew.-% Polypropylen, Polyester oder Polyamid umfassen; oder
die sekundären Polymerbereiche zu mindestens 5 Gew.-% Polyethylen umfassen;
oder beides.

## Revendications

**1.** Procédé de fabrication d'une bande non tissée, le procédé comprenant :
la formation d'une fibre à deux composants, la fibre à deux composants comprenant une ou plusieurs régions polymères primaires et deux régions polymères secondaires ou plus, dans lequel :

les régions polymères primaires comprennent du polyéthylène ;
les régions polymères secondaires comprennent du polypropylène, du polyester, ou du polyamide ;
les régions polymères primaires comprennent au moins 2,5 % en poids de polypropylène, de polyester, ou de polyamide, ou les régions polymères secondaires comprennent au moins 2,5 % en poids de polyéthylène, ou les deux ;
lorsque les régions polymères primaires comprennent au moins 2,5 % en poids de polypropylène, de polyester, ou de polyamide, les régions polymères primaires sont au moins partiellement formées à partir d'un matériau de bande non tissée d'alimentation ;
lorsque les régions polymères secondaires comprennent au moins 2,5 % en poids de polyéthylène, les régions polymères secondaires sont au moins partiellement formées à partir du matériau de bande non tissée d'alimentation ; et
le matériau de bande non tissée d'alimentation comprend :

du polyéthylène ; et
du polypropylène, du polyester, ou du polyamide ; et

la formation de la fibre à deux composants dans la bande non tissée.

**2.** Procédé selon la revendication 1, dans lequel la fibre à deux composants comprend au moins 15 régions polymères secondaires dans une géométrie « île et mer ».

**3.** Procédé selon les revendications 1 ou 2, dans lequel le matériau de bande non tissée d'alimentation est une partie de déchets de la bande non tissée formée dans le procédé selon la revendication 1.

**4.** Procédé selon l'une quelconque des revendications 1 à 3, dans lequel la fibre à deux composants est une fibre discontinue ou une fibre filée-liée.

**5.** Procédé selon l'une quelconque des revendications 1 à 4, dans lequel la bande non tissée est un non-tissé filé-lié ou un non-tissé cardé.

**6.** Procédé selon l'une quelconque des revendications 1 à 5, dans lequel :

les régions polymères primaires comprennent au moins 5 % en poids de polypropylène, de polyester, ou de polyamide ; ou
les régions polymères secondaires comprennent au moins 5 % en poids de polyéthylène ;
ou les deux.

**7.** Procédé selon l'une quelconque des revendications 1 à 6, dans lequel :

les régions polymères primaires comprennent au moins 80 % en poids de polyéthylène ; et
les régions polymères secondaires comprennent au moins 80 % en poids de polypropylène, de polyester, ou de polyamide.

**8.** Procédé selon la revendication 1, le procédé comprenant :

la formation d'une fibre à deux composants par introduction de polyéthylène dans une alimentation en matériau de région polymère primaire et de polypropylène, de polyester, ou de polyamide dans une alimentation en matériau de région polymère secondaire d'un dispositif de formation de fibre, la fibre à deux composants comprenant une ou plusieurs régions polymères primaires formées chacune à partir du polyéthylène et deux régions polymères secondaires ou plus formées à partir du polypropylène, du polyester, ou du polyamide ;
le retrait d'une partie de déchets de la bande non tissée, la partie de déchets comprenant :

du polyéthylène ; et
du polypropylène, du polyester, ou du polyamide ;

l'alimentation d'au moins une partie de la partie de déchets dans la machine de formation de fibre de telle sorte que la fibre à deux composants est formée, dans lequel :

les régions polymères primaires comprennent au moins 2,5 % en poids de polypropylène, de polyester, ou de polyamide ; ou
les régions polymères secondaires comprennent au moins 2,5 % en poids de polyéthylène ;
ou les deux.

**9.** Procédé selon la revendication 8, dans lequel la fibre à deux composants comprend au moins 15 régions polymères secondaires dans une géométrie « île et mer ».

**10.** Procédé selon les revendications 8 ou 9, dans lequel :

les régions polymères primaires comprennent au moins 5 % en poids de polypropylène, de polyester, ou de polyamide ; ou
les régions polymères secondaires comprennent au moins 5 % en poids de polyéthylène ;
ou les deux.

**11.** Procédé selon l'une quelconque des revendications 8 à 10, dans lequel :

les régions polymères primaires comprennent au moins 80 % en poids de polyéthylène ; et
les régions polymères secondaires comprennent au moins 80 % en poids de polypropylène, de polyester, ou de polyamide.

**12.** Bande non tissée formée à partir de fibre à deux composants, dans laquelle la fibre à deux composants comprend :

une ou plusieurs régions polymères primaires et deux régions polymères secondaires ou plus, dans laquelle :

les régions polymères primaires comprennent au moins 80 % en poids de polyéthylène ;
les régions polymères secondaires comprennent au moins 80 % en poids de polypropylène, de polyester, ou de polyamide ; et

dans laquelle :

les régions polymères primaires comprennent au moins 2,5 % en poids de polypropylène, de polyester, ou de polyamide, et la région polymère primaire est au moins partiellement formée à partir d'un matériau de bande non tissée d'alimentation comprenant (a) du polyéthylène et (b) du polypropylène, du polyester, ou du polyamide ; ou
les régions polymères secondaires comprennent au moins 2,5 % en poids de polyéthylène, et la région polymère secondaire est au moins partiellement formée à partir d'un matériau de bande non tissée d'alimentation comprenant (a) du polyéthylène et (b) du polypropylène, du polyester, ou du polyamide ;
ou les deux.

**13.** Bande non tissée selon la revendication 12, dans laquelle la fibre à deux composants comprend au moins 15 régions polymères secondaires dans une géométrie « île et mer ».

**14.** Bande non tissée selon la revendication 12 ou 13, dans laquelle :

les régions polymères primaires comprennent au moins 5 % en poids de polypropylène, de polyester, ou de polyamide ; ou
les régions polymères secondaires comprennent au moins 5 % en poids de polyéthylène ;
ou les deux.

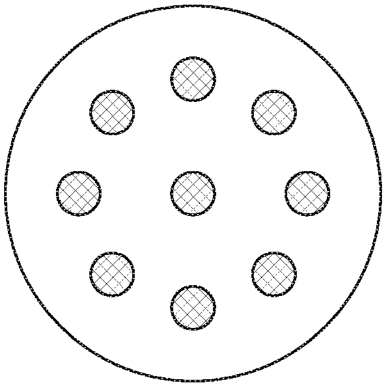

FIG. 1A

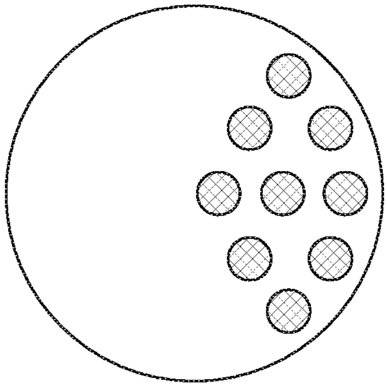

FIG. 1B

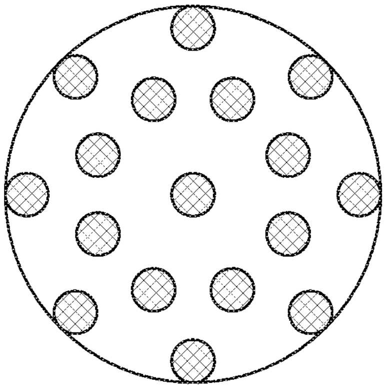

FIG. 1C

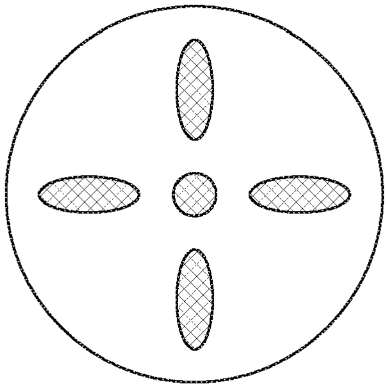

FIG. 1D

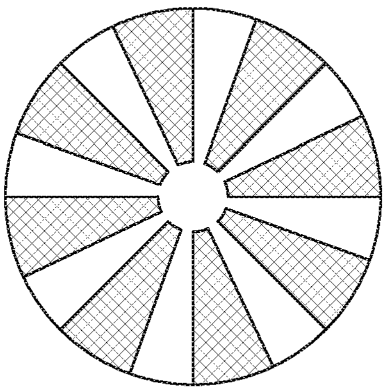

FIG. 1E

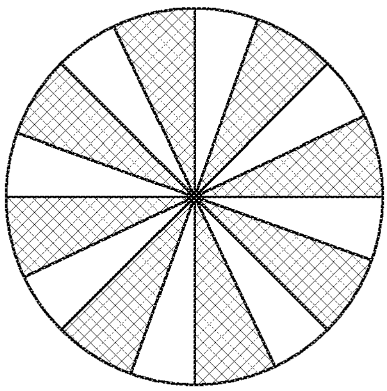

FIG. 1F

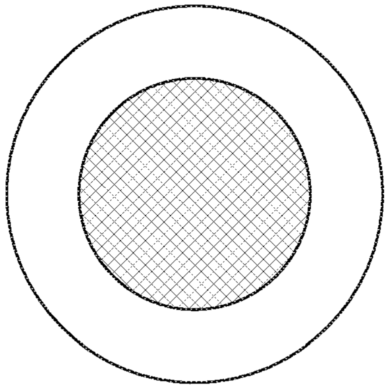

FIG. 2A

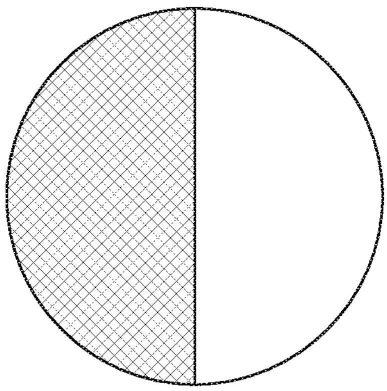

FIG. 2B

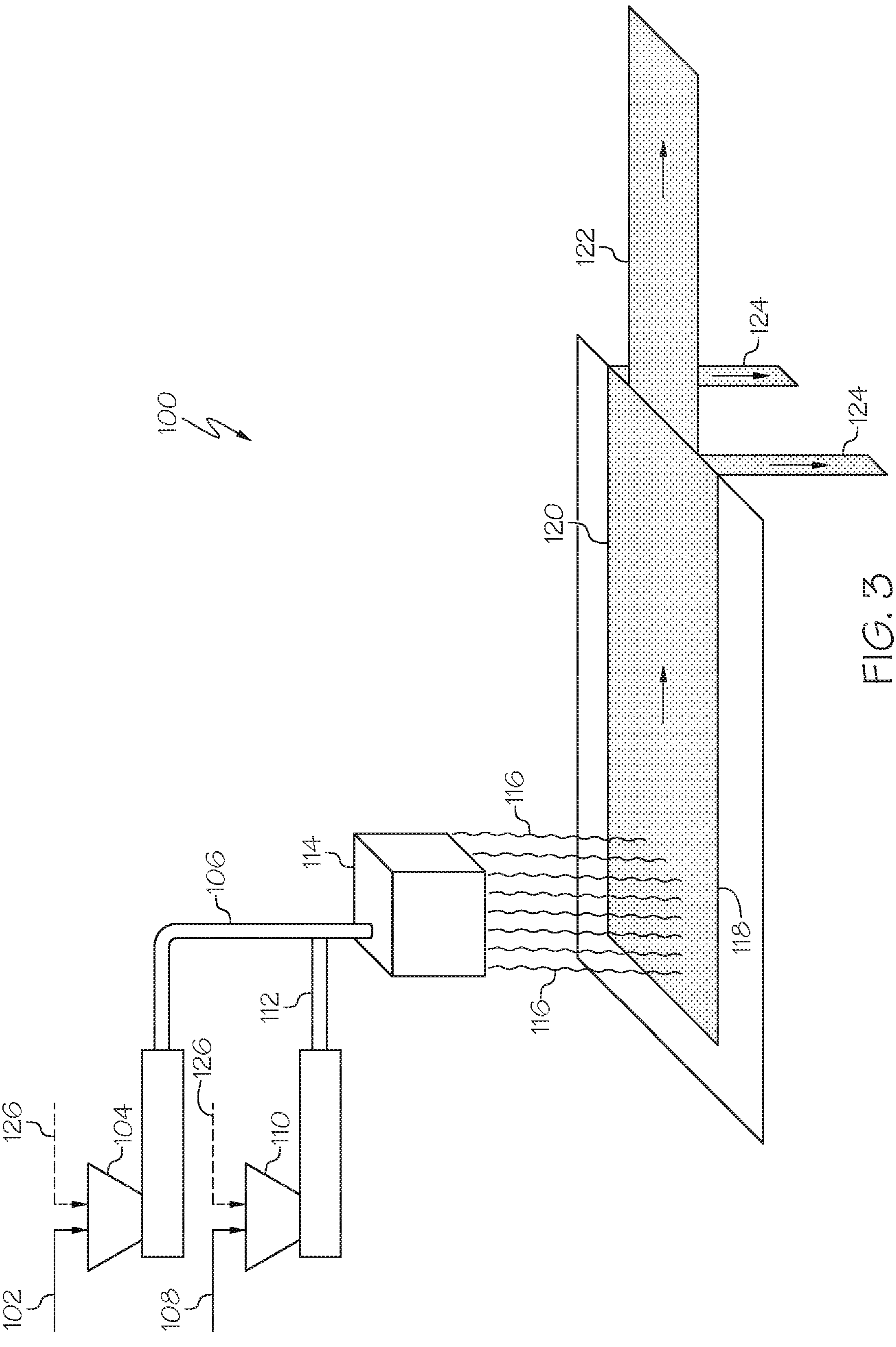
100
102
104
106
108
110
112
114
116
116
118
120
122
124
124
126
126

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62834673
- WO 2007002387 A2
- WO 2018181909 A1
- CN 101591860 A
- US 5565158 A
- EP 18382830
- WO 2020106797 A1
- US 62769618
- US 62769615
- US 20220228297 A1
- US 20220049377 A1


### Non-patent literature cited in the description


- **WILLIAMS ; WARD.** *J. Polym. Sci., Polym. Let.,* 1968, vol. 6, 621
- **BUSICO, V. et al.** *Macromolecules,* 2005, vol. 38, 6988